# EUROPEAN PATENT SPECIFICATION

(11) **EP 2 395 710 B1**
(45) Date of publication and mention of the grant of the patent: **06.11.2013**
(21) Application number: 10290307.7
(22) Date of filing: 08.06.2010
(51) Int. Cl.: H04L 12/70

(54) **Device and method for data load balancing**
Vorrichtung und Verfahren zum Datenlastverteilung
Dispositif et procédé d'équilibrage de charge de données

(43) Date of publication of application: 14.12.2011
(73) Proprietor: Alcatel Lucent, 75007 Paris (FR)
(72) Inventor: T'Syen, Luc, 2230 Herselt (BE); Verbandt, Hugo, 2170 Merksem (Antwerpen) (BE)
(74) Representative: ALU Antw Patent Attorneys

(56) References cited:
- EP-A1- 2 139 195
- EP-A2- 1 838 068
- WO-A1-2006/107249
- US-A1- 2005 155 036
- US-A1- 2010 115 327

## Description

### Field of the Invention

The present invention generally relates to data traffic load balancing in a distributed network system. More in particular, it relates to a method and device for performing such load balancing.

### Background of the Invention

The application of load balancing (also referred to as load sharing) algorithms in distributed network systems is commonly known in the art. Such a distributed network can for example be a communication network over which an IP Multimedia Subsystem (IMS) provides IP multimedia services to fixed and/or mobile terminals. A terminal registers with the IMS, after which the terminal is able to request multimedia services. The multimedia services are provided by application servers. The IMS registers a terminal with an application server, which provides a requested service to the terminal. Multiple application servers may provide services to the same terminal at the same moment.

Such an IMS typically contains a number of nodes with various functions. A first set of nodes are related to routing of communication through the network. Examples of such nodes are the various Call Session Control Functions (CSCF), which can act as a proxy towards the network, perform authentication and authorization checks and ensure that messages of a particular user arrive at the appropriate nodes in the network or vice versa. A second type of nodes concerns the already mentioned Application Servers (AS), which provide certain services to the users of the IMS network. Such services can range from presence and location to more specific services such as Push to Talk over cellular networks services. A third type of nodes are nodes related to user management and storage of user related information such as account information, authorization information, the services with which a particular user is associated, network options enabled or disabled for a particular user, etc. A typical example of the third type of nodes is the Home Subscriber Server (HSS) which acts as a large database for user profiles and other user related information in an IMS network. In the Home Subscriber Server (HSS) the identification provided by the terminal which is being registered, is looked up. The HSS confirms the validity of the terminal identification.

Nodes in the IMS network such as an AS or CSCF can communicate with the HSS and retrieve information concerning a specific user from the HSS or can supply information to the HSS which is stored in the HSS or which is used to update stored information concerning that specific user. The TISPAN/3GPP specifications of a HSS provide the possibility of storing application specific information for users in the HSS, in addition to the user related information which is used for authentication, authorization, billing, etc.

Load balancing algorithms are applied to optimize use of resources by distributing traffic over multiple paths for transferring data from a client source node to a server destination node. Load balancing decisions are typically made on the outbound interface of a client or proxy node and so load balancing must be configured on the outbound interface.

Classical load sharing algorithms (round robin, sequential, cyclic, random, etc..) are working well in configurations where all receptors have equal capacity, i.e. in cases where the load has to be spread evenly over a number of destination nodes. Collection capacity (i.e. server capacity) refers to the degree that resources are available to receive and process new incoming requests from client nodes. Resources correspond to computing power, memory size, storage etc...

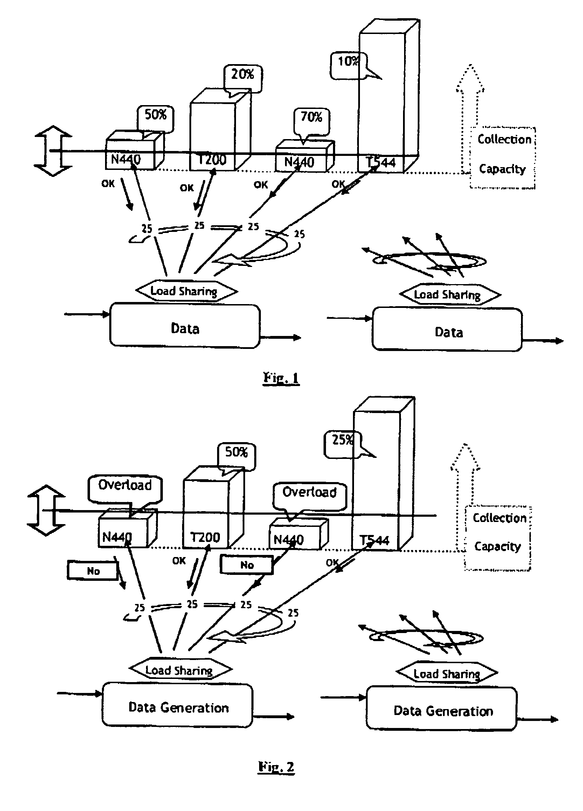

Classical round robin, as illustrated in Fig.1, distributes the load evenly over the different collectors (servers) of the client-server configuration. It does not take the collection capacity of the individual server nodes into account. As shown in Fig.1, this leads to a different load on individual node level in case the nodes have a different collection capacity. The line on the figure represents the equal load sharing over the configuration. The various relative load percentages for the four nodes in the example of Fig.1 are indicated.

However, in the situation illustrated in Fig.2 where a configuration contains server nodes of different collection capacity, classical Round Robin selection causes temporary overload conditions in the nodes with less collection and processing capacity when the equal load sharing exceeds a certain level. The servers then return Boolean responses (meaning e.g. "no space") indicating that the response cannot be processed. The sender (client node) must then select a new collector (i.e. server node) and retransmit the request. This obviously leads to an increase of the overall traffic over the network and thus to an inefficient usage of resources.

Hence, the existing algorithms however have serious limitations in certain situations and environments.
When a configuration grows, it would ideally be extended with nodes that have the best cost/benefit ratio at the time of the extension. In many or even most cases that would correspond with an improved, more performing, high capacity platform and/or a product of a different vendor with different performance and a product with different capacity characteristics. Hence, it is likely that such a multi-node configuration does not remain homogeneous. Such an extended configuration with heterogeneous nodes cannot be dealt with appropriately with prior art solutions as discussed above.

Also, when the capacity of some nodes of a configuration is shared by different functions (or applications) a performance reduction can occur. The existing selection algorithms do not take such transient conditions into account. Often batch processes are scheduled at low traffic time to avoid that the minimal server capacity remains available for collection.

In classical load sharing on mixed (i.e. different capacity) configurations where load must be distributed taking into account the capacity of the server nodes, every sender needs to be pre-configured with selection rules (e.g. a population of load sharing rules) Such population would typically be static. When a specific node experiences additional load due to other processes, a batch job etc., then transient overload conditions can occur that cannot be solved with a static load distribution.

Most systems rely on a (Boolean) indication (meaning "ok" or "not ok") in responses to determine next selection. These back-off responses obviously cause additional load. The overhead traffic also increases with the load level (as there are more negative responses). The Boolean on/off responses may introduce oscillatory behaviour, possibly leading to instabilities and to a collapse instead of a graceful degradation. Further, the available capacity is inefficiently used, as low-capacity server nodes receive relatively more traffic.

An example of static load distribution rules is found in EP2139195 where a solution for registering a terminal with an application server is proposed. A static set of predefined rules is provided which e.g. can be used for obtaining load balancing among a group of servers.

US 2005/0155036 discloses a method and system addressing a serving entity in a communication network. On the basis of a service address, a user registration message for a server is sent to a serving entity group having a plurality of serving entities each of which is arranged to support its service.
US 2010/0115327 discloses a method for establishing an expected traffic load for a plurality of servers, wherein each server has a respective actual capacity. The method includes limiting the actual capacity of each server to respective available capacities, wherein a combined available capacity that is based on the available capacities corresponds to the expected traffic load.

A typical example where the above-sketched problems may occur, concerns the 3GPP Rf interface, where multiple data generators transmit records to multiple data collectors. Another example is the 3GPP Cx interface, when multiple FEPs (Front End Processes) are used to access the HSS (Home Subscriber Server). Other interfaces, protocols, environments may be possible, as the skilled person will appreciate.

### Aims of the invention

The present invention aims to provide a method and device that can be applied when using load balancing in a configuration comprising nodes of different capacity and wherein the limitations of the prior art solutions are overcome.

### Summary

The present invention relates to an adaptive method for determining a data traffic load distribution over a network in an IP Multimedia Subsystem (IMS). The network comprises a client source node and at least two server destination nodes, whereby the at least two server destination nodes have a different capacity for handling data transmission requests. The method comprises the steps of
- the client source node sending a request for data transmission over the network to the at least two server destination nodes according to a client-server protocol,
- each of the at least two server destination nodes transmitting, in response to the request, an indication on the status of its actual capacity,
- the client source node exploiting said status indications for deciding on load distribution of the data traffic over the server destination nodes.

The proposed solution indeed meets the objective of the invention. Each time a client node requests resources for transmitting data traffic, the server destination nodes provide an indication of their actual status, e.g. the percentage of its available maximum capacity that is in use (or that is free). From the information coming from the server nodes, it can then be decided how to balance the load in view of the next data traffic transmission by the client node that had requested resources. The decision indicates which server node to use for the data transmission requested by the client node.

In a preferred embodiment the indication on the status of the actual capacity represents the amount of used capacity or the amount of free capacity.

The status of the actual capacity is advantageously determined taking into account at least memory size, CPU processing time or a combination of these parameters.

In another embodiment the network further comprises a proxy node for establishing connection between the client source node and the server destination node.

The present invention further relates to a network according to claim 6. Also, the invention relates to the use of to an interface device for use in a network in an IP Multimedia Subsystem (IMS), whereby the network comprises a client source node and at least two server destination nodes, the at least two server destination nodes having a different capacity for handling data transmission requests. The interface device comprises
- reception means for receiving from the at least two server destination nodes an indication of the status of its actual capacity,
- processing means for determining a load distribution over the destination nodes based on the received status indications,
- communication means for communicating the determined load distribution to the client source node.

Preferably the processing means is arranged for performing a load balancing algorithm, wherein the status indications are used as weight factors.

In another embodiment the interface device further comprises storage means for storing the received status indications.

In a most preferred embodiment the interface device is arranged for operating according to the RADIUS or Diameter protocol.

The invention also relates to a client source node for use in a network in an IP Multimedia Subsystem, IMS, comprising an interface device as previously described.

### Brief Description of the Drawings

Fig. 1 illustrates a classical round robin algorithm as known in the art.

Fig. 2 illustrates the limitations of the prior art solution of Fig.1.

Fig. 3 illustrates a set-up with a Diameter proxy node.

Fig. 4 illustrates an exemplary application of the present invention.

Fig. 5 illustrates the Diameter redirect behaviour.

Fig. 6 illustrates the performance of a round robin algorithm (prior art).

Fig. 7 illustrates the performance of a solution according to the invention.

### Detailed Description of the Invention

In the present invention an IP Multimedia Subsystem (IMS) is considered for providing multimedia services over a network in a client-server configuration. The server nodes do not all have the same server capacity. With server capacity is meant the capacity in terms of CPU time, memory size, combined CPU and memory size, combination of some system measurements, etc... Capacity in this context gives an indication of the ability to treat future (similar) requests.

In a most preferred embodiment the client-server configuration is arranged for operating according to the Diameter protocol or RADIUS, the predecessor of Diameter.

Radius (Remote Authentication Dial In User Service) is a networking protocol that provides centralized Authentication, Authorization, and Accounting (AAA) management for computers to connect and use a network service. Because of the broad support and the ubiquitous nature of the RADIUS protocol, it is often used by Internet service providers and enterprises to manage access to the Internet or internal networks, wireless networks, and integrated e-mail services. RADIUS is a client/server protocol that runs in the application layer, using UDP as transport. RADIUS serves three functions, namely authenticating users or devices before granting them access to a network, authorizing those users or devices for certain network services and accounting for usage of those services. RADIUS cannot effectively deal well with remote access, IP mobility and policy control.

The Diameter protocol provides an upgrade path for RADIUS. Diameter controls communication between the authenticator and any network entity requesting authentication. The Diameter protocol defines a policy protocol used by clients to perform Policy, AAA and Resource Control. This allows a single server to handle policies for many services. One of the differences with RADIUS is that it uses more reliable transport protocols (TCP or SCTP). The Diameter protocol is further enhanced by the development of the 3GPP IP Multimedia Subsystem (IMS) that was also discussed above.

A Diameter application is not a software application, but a protocol based on the Diameter base protocol. Each application is defined by an application identifier and can add new command codes and/or new mandatory Attribute-Value Pairs. Adding a new optional AVP does not require a new application.

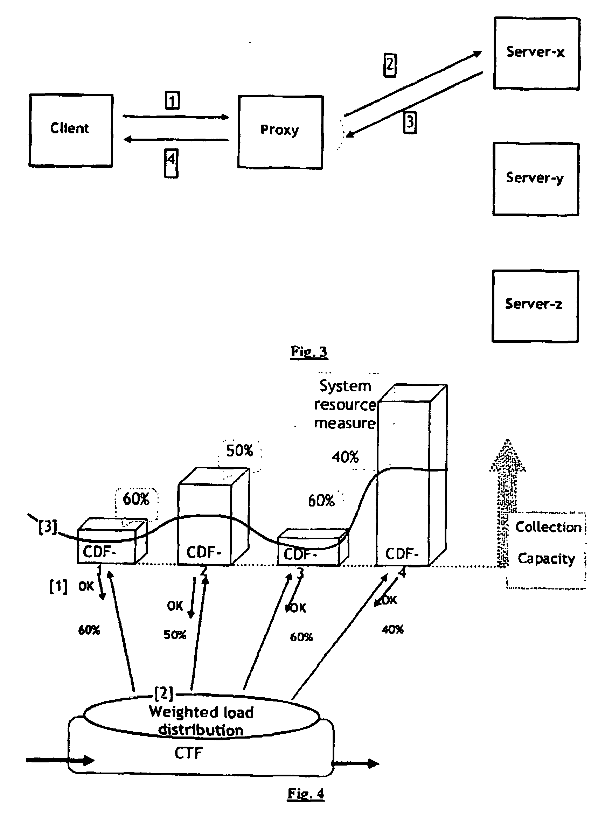

Optionally the client-server network further comprises one or more proxy nodes arranged between a client and a server. The proxy node is typically arranged for performing routing type of functions and possibly also buffering. A Diameter proxy is defined in the Diameter base protocol rfc3588. An illustration of a set-up including a proxy node is given in Fig.3. The link between the client and 'server-x' is established via the Diameter proxy node. Communication takes place in the indicated order: the client contacts the proxy, the proxy communicates with the server in question and then back to the client.

According to the proposed solution the server nodes return an indication on their actual capacity, e.g. over the last x seconds, when a request for data transmission is received from a client node. The indication can for example contain the percentage of the maximum capacity that is available or, oppositely, the percentage that is already in use.

The information about the actual capacity of the server nodes in the network is received by the interface device according to the present invention and is used for determining the load distribution over the destination nodes when the data traffic is transmitted. Servers with a high instantaneous free capacity are selected for the next data transmission with a higher probability. The selection algorithm also ensures that the probability to be selected is less for server nodes that have returned a lower availability indication. The resulting info on the actual load distribution is then provided to the client source node before the actual transmission starts.

The interface device according to the invention is preferably comprised in the source client node. Alternatively it can be a stand-alone device. Such a stand-alone device would then typically behave (protocol-wise) as a Diameter proxy node.

The proposed method offers several advantages. This method allows optimal heterogeneous spreading of traffic over multiple destination nodes according to the volume capacity of the receptors (i.e. the servers). As such the stability and efficiency of the communication is substantially increased. Further, data collection capacity configurations can be built using components of different capacity and process characteristics. This allows a configuration to grow with components of different generations or of different vendors. In the prior art solutions on the contrary, the existing configuration needed an upgrade each time collection capacity was added.

An important asset of the invention is that the load distribution adapts dynamically to new situations. For instance, when remaining collection capacity of a server node decreases temporarily because a batch process runs on that node, the traffic distribution is dynamically updated toward a new optimum.

An example is now provided (see Fig. 4). Again four server destination nodes node are considered with a different capacity. The portion of used capacity is indicated for each node. A client source node has sent a request for transmitting data traffic to a destination node. Step [1] illustrates the server nodes sending, in response to said request, an indication of their actual status in terms of capacity. In the example the server nodes are indicated as CDFs (Charging Data Function, which is an IMS function defined by 3GPP in TS 32.240). The response messages of the server nodes contains two parts : a response code (indicating that the request was handled or not) and an additional indication (possibly implemented as sub-code) of a measure of the capacity (in terms of CPU and/or memory size) that is still available. As the skilled person will readily appreciate, other structures of response message can be envisaged as well. Advantageously the indications on the availability of the various nodes are stored in the CTF (Charging Trigger Function), which is an IMS function defined by 3GPP in TS 32.240.
It is to be noted that the CTF implements the Rf Diameter client. In the example the interpretation of the received load indications is indeed a part of the CTF. However, this can also be a stand-alone function or a function implemented in a Diameter Proxy or even a Diameter redirect.

The Diameter protocol indeed also defines a Diameter redirect node. This node is consulted for routing purposes prior to the actual communication between client and server. In case there is a redirect node in the signaling path, the actual load distribution is still performed by the client. The routing task is in this case shared over the redirect node and the client node.

For selecting the server destination node for the next message the availability information is then taken into account as a weight by the load balancing algorithm wherein a server node is selected. At startup (or at low traffic) the CTF distributes the load evenly over all servers because every server returns a high availability figure (e.g. 95%). When load increases, the availability figure returned by servers with lower capacity decreases. Server nodes with more available capacity left (and thus returning higher availability figures) have a higher probability of being selected as destination than servers with little or no free capacity left. A relatively high number of requests will have the address of such a server. Heavily loaded destination servers are thus selected less often. Consequently, a low number of requests get the address of such a heavily loaded server. In this way an optimal load sharing is achieved. When collection conditions change at one of the servers (e.g. a CPU consuming batch job is executed), the distribution pattern is dynamically adapted to the actual situation.

The purpose of any load balancing algorithm is to generate dynamically (in real-time) a weight indication per server, and use those indications to apply a weighted server selection (as used in for instance DNS). One possible algorithm could be implemented as follows. The load distribution function
o receives and stores a load indication for each of the servers
o builds a dynamic list or array with a number of entries per server corresponding with the received value of that server. When the load indicator corresponds to available resources then the value as is can be used. When the load indicator corresponds to used resources, then (100-%used load) information is applied.
o In every element of the array the address of (or pointer to) the corresponding server is stored
For every new request to be transmitted the sender generates a random number between 0 and (load indic. Server-1 + load indic. Server 2 etc.).
The random value is used as index to access the dynamic array. The destination for the request is stored in the array element.
When the received load indication for a server x is high, then a relatively high number of array entries will have the address of the server x. When the received load indication for a server y is low, consequently a low number of array entries will have the address of that server y. The probability that the random number points to server x is higher.

An example case relates to a 3GPP Rf traffic (Diameter) load shared over a farm of nodes with different collection capacity. Feedback of available capacity ensures optimal load sharing.

To illustrate the performance gain achieved by the solution proposed in the present invention the following comparison with the performance of a round robin algorithm as in the prior art is given.

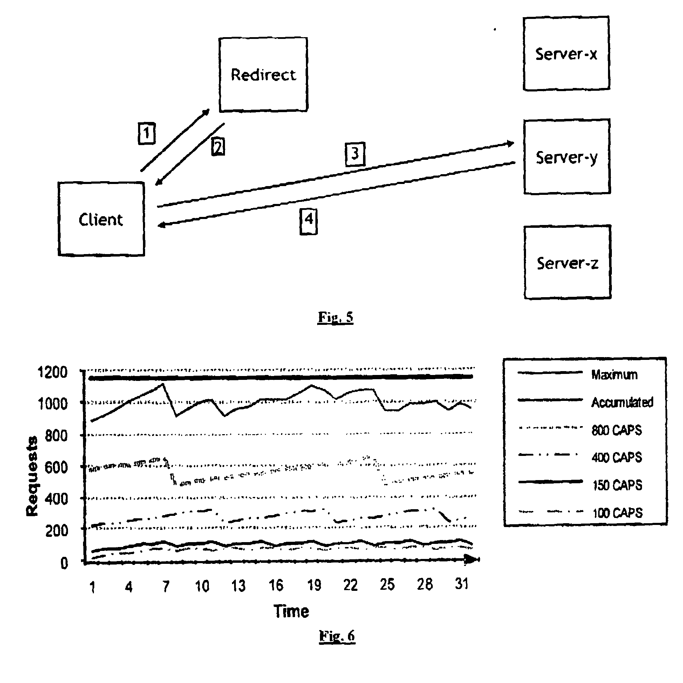

Fig.6 shows a performance curve obtained by applying a round robin selection with a cut-off threshold of 80% of the available server capacity is used. A 'not-OK' message is sent from the moment this threshold level is reached. Traffic is resumed when the level has dropped to 60%. These values are typically set per configuration to "tune" the stability in overload conditions. They define a kind of hysteresis curve which is followed in order to avoid a situation wherein the server status is oscillating between the on and off state. The figure shows the number of requests per second as a function of time for a configuration with four servers with a different capacity of as well as the accumulated throughput. Overhead traffic is observed (especially on the lower capacity nodes). A high fluctuation on the accumulated throughput (total bandwidth) is to be noted. The maximum level (in this case equal to 80% of the sum of the individual server node capacities) cannot be reached.

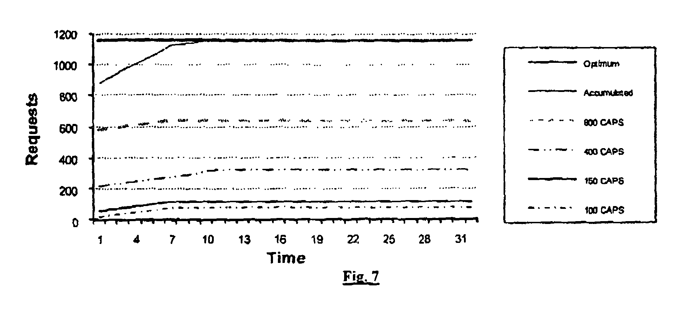

Fig.7 illustrates the performance obtained when using the capacity feedback solution according to the present invention. Again the number of requests per second as a function of time is shown for the same configuration of server nodes as in Fig.6. as well as the accumulated and the optimal throughput. As opposed to Fig.6, no overhead traffic is observed anymore. The oscillating behaviour has disappeared. After a transient time the accumulated capacity corresponds to the optimal level.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope defined by the appended the claims. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope as defined in the claims. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for determining a data traffic load distribution over a network in an Internet Protocol Multimedia Subsystem, IMS, said network comprising a client source node and at least two server destination nodes, said at least two server destination nodes having a different capacity for handling data transmission requests, **characterized in that** said method comprising the steps of
- said client source node sending a request for data transmission over said network to said at least two server destination nodes according to a client-server protocol,
- each of said at least two server destination nodes transmitting, in response to said request, an indication on the status of its actual capacity,
- said client source node exploiting said status indications for deciding on load distribution of said data traffic over said server destination nodes;
wherein the Diameter or Remote Authentication Dial In User Service protocol is used for sending the request for data transmission over the network to the at least two server destination nodes.

2. Method for determining a traffic load distribution as in claim 1, wherein said indication on the status of the actual capacity represents the amount of used capacity or the amount of free capacity.

3. Method for determining a traffic load distribution as in claim 1 or 2, wherein the status of the actual capacity is determined taking into account at least memory and/or processing time.

4. Method for determining a traffic load distribution as in any of claims 1 to 3, whereby said network further comprises a proxy node for establishing connection between said client source node and said server destination node.

5. Network in an Internet Protocol Multimedia Subsystem, IMS, said network comprising a client source node, an interface device comprised in the client source node or in the form of a stand-alone device, and at least two server destination nodes, said at least two server destination nodes having a different capacity for handling data transmission requests, **characterized in that** said client source node is adapted for sending a request for data transmission over the network to the at least two server destination nodes according to a client server protocol, and **in that** said interface device comprises
- reception means adapted for receiving from said at least two server destination nodes an indication of the status of its actual capacity, in response to the request sent by the client source node,
- processing means adapted for determining a load distribution over said destination nodes based on the received status indications,
- communication means adapted for communicating the determined load distribution to said client source node;
wherein the interface device is arranged for sending the request for data transmission over the network to the at least two server destination nodes according to the Remote Authentication Dial In User Service or Diameter protocol.

6. Network as in claim 5, wherein said processing means is arranged for performing a load balancing algorithm, wherein said status indications are used as weight factors.

7. Network as in any of claims 5 or 6, further comprising storage means for storing said received status indications.

8. Network as claimed in any one of the claims 5 to 7, wherein said client source node comprises the interface device

9. Use of an interface device in a network as claimed in any one of the claims 5 to 8, **characterized in that** said interface device comprises
- reception means adapted for receiving from said at least two server destination nodes an indication of the status of its actual capacity,
- processing means adapted for determining a load distribution over said destination nodes based on the received status indications,
- communication means adapted for communicating the determined load distribution to said client source node;
wherein the interface device is arranged for sending the request for data transmission over the network to the at least two server destination nodes according to the Remote Authentication Dial In User Service or Diameter protocol.

## Patentansprüche

1. Verfahren zur Bestimmung einer Datenverkehrslastverteilung über ein Netzwerk in einem Internetprotokoll-Multimedia-Subsystem, IMS, wobei das besagte Netzwerk einen Client-Quellknoten und mindestens zwei Server-Zielknoten umfasst, wobei die besagten mindestens zwei Server-Zielknoten unterschiedliche Kapazitäten für die Verarbeitung von Datenübertragungsanforderungen aufweisen, **dadurch gekennzeichnet, dass** das besagte Verfahren die folgenden Schritte umfasst:
- Senden, durch den besagten Client-Quellknoten, einer Anforderung für die Übertragung von Daten über das besagte Netzwerk an die besagten mindestens zwei Server-Zielknoten gemäß einem Client-Server-Protokoll,
- Übertragen, durch einen jeden der besagten mindestens zwei Server-Zielknoten, einer Angabe über den Zustand ihrer effektiven Kapazität in Antwort auf die besagte Anforderung,
- Auswerten, durch den besagten Client-Quellknoten, der besagten Zustandsangaben, um über die Lastverteilung des besagten Datenverkehrs über die besagten Server-Zielknoten zu entscheiden;
wobei das Diameter- oder Remote Authentication Dial In User Service-Protokoll für das Senden der Anforderung für die Übertragung von Daten über das Netzwerk an die mindestens zwei Server-Zielknoten verwendet wird.

2. Verfahren zur Bestimmung einer Verkehrslastverteilung nach Anspruch 1, wobei die besagte Angabe über den Zustand der effektiven Kapazität die Menge der benutzten Kapazität oder die Menge der verfügbaren Kapazität darstellt.

3. Verfahren zur Bestimmung einer Verkehrslastverteilung nach Anspruch 1 oder 2, wobei der Zustand der effektiven Kapazität unter Berücksichtigung zumindest der Speicher- und/oder Verarbeitungszeit bestimmt wird.

4. Verfahren zur Bestimmung einer Verkehrslastverteilung nach einem beliebigen der Ansprüche 1 bis 3, wobei das besagte Netzwerk weiterhin einen Proxy-Knoten zum Aufbauen einer Verbindung zwischen dem besagten Client-Quellknoten und dem besagten Server-Zielknoten umfasst.

5. Netzwerk in einem Internetprotokoll-Multimedia-Subsystem, IMS, wobei das besagte Netzwerk einen Client-Quellknoten, eine Schnittstellenvorrichtung, welche in dem Client-Quellknoten enthalten ist oder die Form einer eigenständigen Vorrichtung aufweist, und mindestens zwei Server-Zielknoten umfasst, wobei die besagten mindestens zwei Server-Zielknoten unterschiedliche Kapazitäten für die Verarbeitung von Datenübertragungsanforderungen aufweisen, **dadurch gekennzeichnet, dass** der besagte Client-Quellknoten für das Senden einer Anforderung für die Übertragung von Daten über das Netzwerk an die mindestens zwei Server-Zielknoten gemäß einem Client-Server-Protokoll ausgelegt ist, und dass die besagte Schnittstellenvorrichtung umfasst:
- Empfangsmittel, ausgelegt für den Empfang, von den besagten mindestens zwei Server-Zielknoten, einer Angabe über den Zustand ihrer effektiven Kapazität in Antwort auf die besagte von dem Client-Quellknoten gesendete Anforderung,
- Verarbeitungsmittel, ausgelegt für das Bestimmen einer Lastverteilung über die besagten Zielknoten auf der Basis der empfangenen Zustandsangaben,
- Meldemittel, ausgelegt für das Melden der bestimmten Lastverteilung an den besagten Client-Quellknoten;
wobei die Schnittstellenvorrichtung für das Senden der Anforderung für die Übertragung von Daten über das Netzwerk an die mindestens zwei Server-Zielknoten gemäß dem Remote Authentication Dial In User Service- oder Diameter-Protokoll ausgelegt ist.

6. Netzwerk nach Anspruch 5, wobei das besagte Verarbeitungsmittel für das Ausführen eines Lastverteilungsalgorithmus ausgelegt ist, wobei die besagten Zustandsangaben als Gewichtsfaktoren verwendet werden.

7. Netzwerk nach einem beliebigen der Ansprüche 5 oder 6, weiterhin umfassend Speichermittel zum Speichern der besagten empfangenen Zustandsangaben.

8. Netzwerk nach einem beliebigen der Ansprüche 5 bis 7, wobei der besagte Client-Quellknoten die Schnittstellenvorrichtung umfasst.

9. Verwenden einer Schnittstellenvorrichtung in einem Netzwerk gemäß einem beliebigen der Ansprüche 5 bis 8, **dadurch gekennzeichnet, dass** die besagte Schnittstellenvorrichtung umfasst:
- Empfangsmittel, ausgelegt für den Empfang, von den besagten mindestens zwei Server-Zielknoten, einer Angabe über den Zustand ihrer effektiven Kapazität,
- Verarbeitungsmittel, ausgelegt für das Bestimmen einer Lastverteilung über die besagten Zielknoten auf der Basis der empfangenen Zustandsangaben,
- Meldemittel, ausgelegt für das Melden der bestimmten Lastverteilung an den besagten Client-Quellknoten;
wobei die Schnittstellenvorrichtung für das Senden der Anforderung für die Übertragung von Daten über das Netzwerk an die mindestens zwei Server-Zielknoten gemäß dem Remote Authentication Dial In User Service- oder Diameter-Protokoll ausgelegt ist.

## Revendications

1. Procédé de détermination d'une répartition des charges de trafic de données sur un réseau dans un sous-système multimédia de protocole Internet, IMS, ledit réseau comprenant un noeud client d'origine et au moins deux noeuds serveurs de destination, lesdits au moins deux noeuds serveurs de destination ayant une capacité différente pour gérer des demandes de transmission de données, **caractérisé en ce que** ledit procédé comprend les étapes suivantes
- ledit noeud client d'origine envoie une demande de transmission de données sur ledit réseau auxdits au moins deux noeuds serveurs de destination conformément à un protocole client-serveur,
- chacun desdits au moins deux noeuds serveurs de destination transmet, en réponse à ladite demande, une indication de l'état de sa capacité réelle,
- ledit noeud client d'origine exploite lesdites indications d'état pour décider de la répartition des charges dudit trafic de données sur lesdits noeuds serveurs de destination ;
dans lequel le protocole de service d'usager commuté à authentification distante ou le protocole Diameter est utilisé pour envoyer la demande de transmission de données sur le réseau aux deux noeuds serveurs de destination ou plus.

2. Procédé de détermination d'une répartition des charges de trafic selon la revendication 1, dans lequel ladite indication de l'état de la capacité réelle représente la quantité de capacité utilisée ou la quantité de capacité libre.

3. Procédé de détermination d'une répartition des charges de trafic selon la revendication 1 ou 2, dans lequel l'état de la capacité réelle est déterminé en tenant compte d'au moins un temps de mémoire et/ou de traitement.

4. Procédé de détermination d'une répartition des charges de trafic selon l'une quelconque des revendications 1 à 3, ledit réseau comprenant en outre un noeud mandataire pour établir une connexion entre ledit noeud client d'origine et ledit noeud serveur de destination.

5. Réseau dans un sous-système multimédia de protocole Internet, IMS, ledit réseau comprenant un noeud client d'origine, un dispositif d'interface contenu dans le noeud client d'origine ou sous la forme d'un dispositif autonome, et au moins deux noeuds serveurs de destination, lesdits au moins deux noeuds serveurs de destination ayant une capacité différente pour gérer des demandes de transmission de données, **caractérisé en ce que** ledit noeud client d'origine est adapté pour envoyer une demande de transmission de données sur le réseau aux deux noeuds serveurs de destination ou plus conformément à un protocole client-serveur, et **en ce que** ledit dispositif d'interface comprend
- des moyens de réception adaptés pour recevoir desdits au moins deux noeuds serveurs de destination une indication de l'état de sa capacité réelle, en réponse à la demande envoyée par le noeud client d'origine,
- des moyens de traitement adaptés pour déterminer une répartition des charges sur lesdits noeuds de destination sur la base des indications d'état reçues,
- des moyens de communication adaptés pour communiquer la répartition des charges déterminée audit noeud client d'origine ;
dans lequel le dispositif d'interface est conçu pour envoyer la demande de transmission de données sur le réseau aux deux noeuds serveurs de destination ou plus conformément au protocole de service d'usager commuté à authentification distante ou au protocole Diameter.

6. Réseau selon la revendication 5, dans lequel lesdits moyens de traitement sont conçus pour réaliser un algorithme d'équilibrage de charge, dans lequel lesdites indications d'état sont utilisées comme facteurs de pondération.

7. Réseau selon l'une quelconque des revendications 5 et 6, comprenant en outre des moyens de stockage pour stocker lesdites indications d'état reçues.

8. Réseau selon l'une quelconque des revendications 5 à 7, dans lequel ledit noeud client d'origine comprend le dispositif d'interface.

9. Utilisation d'un dispositif d'interface dans un réseau selon l'une quelconque des revendications 5 à 8, **caractérisée en ce que** ledit dispositif d'interface comprend
- des moyens de réception adaptés pour recevoir desdits au moins deux noeuds serveurs de destination une indication de l'état de sa capacité réelle,
- des moyens de traitement adaptés pour déterminer une répartition des charges sur lesdits noeuds de destination sur la base des indications d'état reçues,
- des moyens de communication adaptés pour communiquer la répartition des charges déterminée audit noeud client d'origine ;
dans laquelle le dispositif d'interface est conçu pour envoyer la demande de transmission de données sur le réseau aux deux noeuds serveurs de destination ou plus conformément au protocole de service d'usager commuté à authentification distante ou au protocole Diameter.
